# EUROPEAN PATENT SPECIFICATION

(11) **EP 3 534 660 B1**
(45) Date of publication and mention of the grant of the patent: **28.10.2020**
(21) Application number: 17930507.3
(22) Date of filing: 03.11.2017
(51) Int. Cl.: H04W 76/14, H04W 76/23, H04W 72/04, H04W 52/02

(54) **DATA TRANSMISSION METHOD AND DEVICE**
DATENÜBERTRAGUNGSVERFAHREN UND -VORRICHTUNG
PROCÉDÉ ET DISPOSITIF DE TRANSMISSION DE DONNÉES

(43) Date of publication of application: 04.09.2019
(73) Proprietor: GUANGDONG OPPO MOBILE TELECOMMUNICATIONS CORP., LTD., Wusha, Chang'an Dongguan, Guangdong 523860 (CN)
(72) Inventor: TANG, Hai, Dongguan Guangdong 523860 (CN)
(74) Representative: Manitz Finsterwald Patent- und Rechtsanwaltspartnerschaft mbB
(86) International application number: PCT/CN2017/109400
(87) International publication number: WO 2019/084924

(56) References cited:
- EP-A1- 3 089 531
- WO-A1-2017/026543
- WO-A2-2010/027186
- CN-A- 102 668 686
- CN-A- 104 284 445
- CN-A- 105 208 664
- CN-A- 105 900 508
- US-A1- 2017 195 946

## Description

### Technical Field

Implementations of the present disclosure relate to the communication field, and more particularly, to a method and a device for transmitting data.

### Background

A vehicle networking system is a Sidelink (SL) transmission technology based on Long Term Evolution Vehicle to Vehicle (LTE V2V). It is different from a manner in the traditional LTE system in which communication data is received or transmitted through a base station. The vehicle networking system adopts a direct communication manner of terminal-to-terminal, so it has a higher spectral efficiency and lower transmission delay.

In 3rd Generation Partnership Project (3GPP) Rel-14, a vehicle networking technology, i.e., a Vehicle to Everything (V2X) technology is standardized, and two transmission modes are defined: mode 3 and mode 4. Specifically, in the mode 3, transmission resources of a vehicle user equipment are allocated by a base station, and the vehicle user equipment transmits data on the side link according to the resources allocated by the base station; the base station may allocate resources for a single transmission to the terminal or resources for semi-static transmission to the terminal. In the mode 4, a vehicle user equipment adopts a transmission manner of sensing plus reservation. Specifically, the vehicle user equipment acquires an available transmission resource set in a resource pool by sensing, and the terminal randomly selects one resource from the set for data communication.

V2X is extended to a multi-carrier scenario in 3GPP Rel-15, that is, a terminal device may transmit and receive data on multiple carriers at the same time. In this case, how to select a carrier to reduce power consumption is an urgent problem for the terminal device.

Related technologies are known from WO 2010/027186 A2, US 2017/195946 A1, and EP 3089531 A1.

### Summary

The present invention defines a method according to claim 1 and a device according to claim 2. A further embodiment is set forth in the dependent claim 3.

### Brief Description of Drawings

Fig. 1 shows a schematic diagram of an application scenario according to an implementation of the present disclosure.
Fig. 2 is a schematic flowchart of a method for transmitting data according to an implementation of the present disclosure.
Fig. 3 is a schematic flowchart of a method for transmitting data according to another implementation of the present disclosure.
Fig. 4 shows a schematic block diagram of a device for transmitting data according to an implementation of the present disclosure.
Fig. 5 shows a schematic block diagram of a device for transmitting data according to another implementation of the present disclosure.
Fig. 6 shows a schematic block diagram of a device for transmitting data according to an implementation of the present disclosure.
Fig. 7 shows a schematic block diagram of a device for transmitting data according to another implementation of the present disclosure.

### Detailed Description

In the following, technical schemes in the implementations of the present disclosure will be described with reference to the drawings in the implementations of the present disclosure.

It should be understood that the technical schemes of the implementations of the present disclosure may be applied to various communication systems, for example, LTE system, LTE frequency division duplex (FDD) system, LTE time division duplex (TDD), 4.5th generation (4.5G) network, 5th generation (5G) network, and new radio (NR). Implementations of the present disclosure may also be applied to vehicle to everything (V2X) system, such as vehicle to vehicle (V2V) system; or, it may be applied to device to device (D2D) system, and the implementations of the present disclosure are not limited thereto.

It should be understood that a terminal device in the implementations of the present disclosure may also be referred to as a terminal, user equipment (UE), mobile station (MS), mobile terminal (MT), etc. The terminal device may be a vehicle user equipment (VUE), for example, a wireless terminal in a vehicle or self-driving vehicle, or, the terminal device may be a pedestrian user equipment (PUE), for example, a mobile phone, a tablet computer (Pad), or a computer with wireless transceiver function.

It should be understood that the network device involved in the implementations of the present disclosure is an apparatus deployed in a wireless access network and used to provide wireless communication functions for a terminal device. The network device may be a base station, and the base station may include various forms of macro base station, micro base station, relay station, access point, etc. In systems adopting different wireless accessing technologies, names of devices with functionality of a base station may be different. For example, in a LTE network, it is called evolved nodeB (eNB or eNodeB), and in a 3rd Generation (3G) network, it is called Node B.

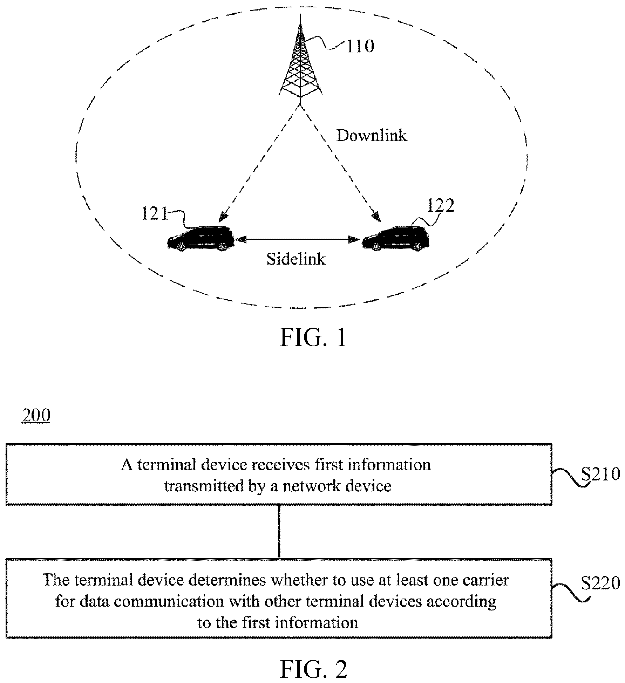

Fig. 1 shows a schematic diagram of a vehicle networking system according to an implementation of the present disclosure. As shown in Fig. 1, the implementation of the present disclosure may be applied to various application scenarios. A network device and a terminal device in the vehicle networking system are taken as an example, wherein the network device may be a base station 110 and the terminal device may be a VUE, for example, a vehicle 121 and a vehicle 122.

In the vehicle networking system, the terminal device may transmit and receive data through multiple carriers at the same time. Generally, the terminal device should receive data on all carriers. A carrier used to transmit data may be determined by the terminal device, that is, the terminal device may choose which carrier to use to transmit data, but the terminal device cannot choose which carrier to receive data.

In view of this, the implementation of the present disclosure provides a method for transmitting data, which can realize the selection of a carrier by the terminal device.

Fig. 2 is a schematic flowchart of a method 200 for transmitting data provided by an implementation of the present disclosure, which may be executed by a terminal device in a vehicle networking system, such as the VUE 121 or VUE 122 shown in Fig. 1.

As shown in Fig. 2, the method 200 includes acts S210 and S220.

In S210, a terminal device receives first information transmitted by a network device.

In S220, the terminal device determines whether to use at least one carrier for data communication with other terminal devices according to the first information.

That is, the first information may be used to determine an enabling status of the at least one carrier, that is, the first information may be used to determine to enable the at least one carrier or to disable the at least one carrier. More specifically, the first information may be used to determine to disable the transmitting or receiving function of the at least one carrier, or to simultaneously disable the transmitting and receiving functions of the at least one carrier.

In the implementation of the present disclosure, the first information may directly indicate the terminal device to disable (i.e., be prohibited to use) at least one carrier, or enable (i.e., be able to use) at least one carrier (i.e., disable other carriers other than the at least one carrier), or the first information may implicitly indicate disabling at least one carrier, or enable the at least one carrier. For example, the first information may be configuration information of the at least one carrier, and the terminal device may determine to enable or disable a carrier in the case that the configuration information of the at least one carrier includes or does not include information of a configuration of the carrier.

Optionally, as an implementation, the first information may be used for indicating an enabling status of the at least one carrier.

That is, the first information may be indication information indicating the enabling status of the at least one carrier, and in this case, the first information may be considered as an explicit indication.

For example, the first information may be used for indicating disabling the at least one carrier. In this case, the terminal device may determine not to use the at least one carrier, that is, not to use the at least one carrier to transmit and receive data with other terminal devices, or to turn off the transmitting and receiving functions of the at least one carrier, thereby reducing the power consumption of the terminal device. In this case, the terminal device may use other carriers other than the at least one carrier to perform data communication with other terminal devices.

As another example, the first information may be used for indicating enabling the at least one carrier. In this case, the terminal device may determine not to use other carriers other than the at least one carrier, that is, not to use other carriers other than the at least one carrier to transmit and receive data with other terminal devices, or to turn off the transmission and reception functions of other carriers other than the at least one carrier, thereby reducing the power consumption of the terminal device.

In a specific implementation, the first information is specifically used for indicating disabling transmission and/or reception of the at least one carrier.

The first information may be used for indicating disabling transmission of the at least one carrier, or the first information may be used for indicating disabling reception of the at least one carrier, or the first information may be used for indicating disabling transmission and reception of the at least one carrier. That is, the network device may independently control the transmission and/or reception functions of the at least one carrier through the first information. Optionally, if the at least one carrier includes a first carrier and a second carrier, the first information may be used for indicating disabling transmission and/or reception of the first carrier and disabling transmission and/or reception of the second carrier. For example, the first information may be used to specifically indicate disabling transmission of the first carrier, and disabling reception of the second carrier, etc.

Since neither the terminal device nor other terminal devices transmit data through the first carrier when disabling the transmitting function of the first carrier, the terminal device may not need to receive data through the first carrier. In this case, the terminal device may turn off the receiving function of the first carrier to reduce power consumption. That is, the terminal device may directly determine not to use the at least one carrier for data transmission and reception under the situation that the first information indicates disabling the transmitting function or the receiving function of the at least one carrier, that is, to simultaneously turn off the transmission and reception functions of the at least one carrier, thereby reducing power consumption.

Therefore, in the method for transmitting data according to the implementation of the present disclosure, the terminal device may determine an enabling status of at least one carrier according to first information of a network device, and further, under the situation of using the at least one carrier, the terminal device may turn off the transmitting and receiving functions of the at least one carrier, which is beneficial for reducing the power consumption of the terminal device.

It should be noted that in the implementation of the present disclosure, the first information may also be used for indicating enabling transmission and/or reception of the at least one carrier, and in this case, it may be considered to disable transmission and/or reception functions of other carriers other than the at least one carrier.

Optionally, as an implementation, S220 may specifically include: if the first information is used for indicating disabling transmission of the at least one carrier, determining, by the terminal device, not to use the at least one carrier to receive data transmitted by other terminal devices and not to use the at least one carrier to transmit data to other terminal devices.

That is, when the first information indicates disabling the transmitting function of the at least one carrier, the terminal device may not only disable the transmitting function of the at least one carrier, but also turn off the receiving function of the at least one carrier at the same time. The reason is that, when the transmitting function of a carrier is prohibited, generally terminal devices do not use the carrier for data transmission, that is, there is no need to receive data through the carrier. Therefore, the receiving function of the carrier may be turned off at the same time to reduce the power consumption of the terminal device.

Optionally, as another implementation, S220 may specifically include: if the first information is used for indicating disabling reception of the at least one carrier, determining, by the terminal device, not to use the at least one carrier to transmit data to other terminal devices and not to use the at least one carrier to receive data transmitted by other terminal devices.

That is, when the first information indicates disabling the receiving function of the at least one carrier, the terminal device may not only disable the receiving function of the at least one carrier, but also turn off the transmitting function of the at least one carrier at the same time. The reason is that, when the receiving function of the carrier is prohibited, terminal devices do not use the carrier to receive data. In order to avoid data loss caused by still using, by a terminal device, the carrier to transmit data while other terminal devices do not receive the data, the transmitting function of the carrier may be prohibited at the same time when the receiving function of the carrier is turned off, thus avoiding the data loss problem caused by the receiving function being turned off and the transmitting function not being prohibited, and reducing the power consumption of the terminal device.

Optionally, as yet another implementation, S220 may specifically include: if the first information is used for indicating disabling transmission and reception of the at least one carrier, determining, by the terminal device, not to use the at least one carrier to transmit data to other terminal devices and not to use the at least one carrier to receive data transmitted by other terminal devices.

That is, when the first information indicates disabling the transmitting and receiving functions of the at least one carrier, the terminal device simultaneously disables the transmitting and receiving functions of the at least one carrier, thereby reducing the power consumption of the terminal device.

As described above, the first information may implicitly indicate the enabling status of at least one carrier, for example, the first information is configuration information of the at least one carrier, and it may be determined to disable a carrier when the configuration information of the at least one carrier does not include information of a configuration of the carrier.

Optionally, in an implementation, S220 may specifically include: if the first information does not include information of a transmitting resource pool and/or a receiving resource pool of the at least one carrier, determining, by the terminal device, not to use the at least one carrier for data communication with other terminal devices.

That is, if the first information does not include the information of the transmitting resource pool and/or the receiving resource pool of the first carrier, the terminal device may determine to disable the transmission and/or reception of the first carrier, and may further determine not to use the first carrier to perform data communication with other terminal devices.

For example, if the first information does not include information of the transmitting resource pool of the first carrier, the terminal device may determine to disable the transmission of the first carrier, and further, the terminal device may determine not to use the transmitting and receiving functions of the first carrier.

For example, if the first information does not include the information of the receiving resource pool of the first carrier, the terminal device may determine to disable the reception of the first carrier, and further, the terminal device may determine not to use the transmitting and receiving functions of the first carrier.

Optionally, in another implementation, S220 may specifically include that: if the first information does not include authentication information of the at least one carrier, the terminal device determines not to use the at least one carrier for data communication with other terminal devices.

That is, if the first information does not include authentication information of the first carrier, the terminal device may determine to disable the transmitting and/or receiving functions of the first carrier, and may further determine not to use the first carrier to perform data communication with other terminal devices.

It should be noted that the above implicit indication manners are only examples. In the implementation of the present disclosure, it is possible to determine to disable the transmitting and receiving functions of the first carrier when the first information does not include other configuration information of the first carrier. The implementation of the present disclosure is not limited thereto.

Optionally, in the implementation of the present disclosure, the network device may be an access network device or a core network device. Since network areas served by the access network device and that served by the core network device are different, an unusable area (i.e., prohibited area) of the at least one carrier may be determined according to the type of the network device. For example, in the case that the network device is an access network device, the first information may be specifically used for indicating disabling (i.e., being prohibited to use) the at least one carrier in a cell covered by the access network device, or in the case that the network device is a core network device, the first information may be specifically used for indicating disabling (i.e., being prohibited to use) the at least one carrier in a network covered by the core network device, i.e., the type of the network device may control granularity (or accuracy) of an area used by a carrier.

In a specific implementation, S220 may specifically include: if the network device is an access network device, determining, by the terminal device, not to use the at least one carrier to transmit and receive data with other terminal devices in a cell covered by the access network device.

That is, if the first information is transmitted by an access network device to the terminal device, the terminal device may determine that the at least one carrier is not used for data transmission and reception in the cell covered by the access network device according to the first information, that is, neither the at least one carrier is used for data transmission nor the at least one carrier is used for data reception in the cell covered by the access network device, or the terminal device may shut down the at least one carrier to reduce the power consumption of the terminal device. Optionally, the terminal device may use other carriers other than the at least one carrier to transmit and receive data in the cell covered by the access network device, or the terminal device may use the at least one carrier to transmit and receive data in other areas other than the cell covered by the access network device.

Optionally, in some implementations, the first information may also be used for indicating a usage range of the at least one carrier.

For example, the first information may also be used for indicating an identification of a cell where the at least one carrier cannot be used, or an identification of a cell where the at least one carrier can be used, so that the terminal device may determine a usage range of the at least one carrier according to the identification of the cell.

Optionally, in another specific implementation, S220 may specifically include: if the network device is a core network device, determining, by the terminal device, not to use the at least one carrier to transmit and receive data with other terminal devices in a network covered by the core network device.

That is, if the first information is transmitted by a core network device to the terminal device, the terminal device may determine that the at least one carrier is not used for data transmission and reception in the network area covered by the core network device according to the first information, that is, neither the at least one carrier is used for data transmission nor the at least one carrier is used for data reception in the network covered by the core network device, or the terminal device may shut down the at least one carrier to reduce the power consumption of the terminal device. Optionally, the terminal device may use other carriers other than the at least one carrier to transmit and receive data in the network covered by the core network device, or the terminal device may use the at least one carrier to transmit and receive data in other areas other than the network covered by the core network device.

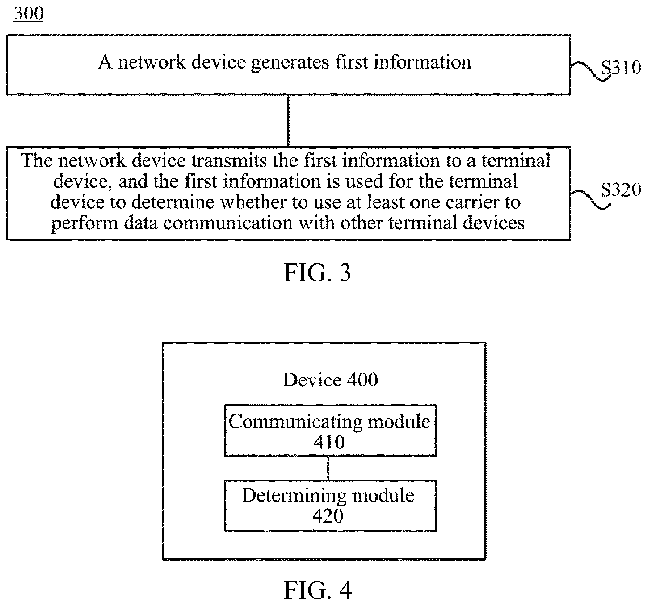

The method for transmitting data according to the implementation of the present disclosure is described in detail from the perspective of a terminal device above in combination with Fig. 2, and a method for transmitting data according to another implementation of the present disclosure is described in detail from the perspective of a network device below in combination with Fig. 3. It should be understood that the description on the network device side corresponds to the description on the terminal device side, and similar descriptions may be referred to in the above, which will not be repeated here to avoid repetition.

Fig. 3 is a schematic flowchart of a method 300 for transmitting data according to another implementation of the present disclosure, which may be executed by a network device in a vehicle networking system shown in Fig. 1. As shown in Fig. 3, the method 300 includes acts S310 and S320.

In S310, a network device generates first information.

In S320, the network device transmits the first information to a terminal device, and the first information is used for the terminal device to determine whether to use at least one carrier to perform data communication with other terminal devices.

Optionally, in some implementations, the first information is used for indicating an enabling status of the at least one carrier.

Optionally, in some implementations, the first information is specifically used for indicating disabling transmission and/or reception of the at least one carrier.

Optionally, in some implementations, the first information is configuration information of the at least one carrier, and when the first information does not include information of a transmitting resource pool and/or a receiving resource pool of the at least one carrier, or the first information does not include authentication information of the at least one carrier, the first information is used for indicating the terminal device to disable transmission and/or reception of the at least one carrier.

Optionally, in some implementations, if the network device is an access network device, the first information is specifically used for indicating disabling transmission and/or reception of the at least one carrier within a cell covered by the access network device; or if the network device is a core network device, the first information is specifically used for indicating disabling transmission and/or reception of the at least one carrier within the network covered by the core network device.

The method implementations of the present disclosure are described in detail above with reference to Figs. 2 and 3. The device implementations of the present disclosure are described in detail below with reference to Figs. 4 to 7. It should be understood that the device implementations and the method implementations correspond to each other, and the method implementations may be referred to for similar descriptions.

Fig. 4 shows a schematic block diagram of a device 400 for transmitting data according to an implementation of the present disclosure. As shown in Fig. 4, the device 400 includes a communicating module 410 and a determining module 420.

The communicating module 410 is used for receiving first information transmitted by a network device.

The determining module 420 is used for determining whether to use at least one carrier for data communication with other terminal devices according to the first information.

Optionally, in some implementations, the first information is used for indicating an enabling status of the at least one carrier.

Optionally, in some implementations, the first information is specifically used for indicating disabling transmission and/or reception of the at least one carrier.

Optionally, in some implementations, the determining module 420 is specifically used for: if the first information is used for indicating disabling transmission of the at least one carrier, determining not to use the at least one carrier to receive data transmitted by other terminal devices and not to use the at least one carrier to transmit data to other terminal devices.

Optionally, in some implementations, the determining module 420 is specifically used for: if the first information is used for indicating disabling reception of the at least one carrier, determining not to use the at least one carrier to transmit data to other terminal devices and not to use the at least one carrier to receive data transmitted by other terminal devices.

Optionally, in some implementations, the determining module 420 is specifically used for: if the first information is used for indicating disabling transmission and reception of the at least one carrier, determining not to use the at least one carrier to transmit data to other terminal devices and not to use the at least one carrier to receive data transmitted by other terminal devices.

Optionally, in some implementations, the first information is configuration information of the at least one carrier.

Optionally, in some implementations, the determining module 420 is specifically used for: if the first information does not include information of a transmitting resource pool and/or a receiving resource pool of the at least one carrier, determining not to use the at least one carrier for data communication with other terminal devices.

Optionally, in some implementations, the determining module 420 is specifically used for: if the first information does not include authentication information of the at least one carrier, determining not to use the at least one carrier for data communication with other terminal devices.

Optionally, in some implementations, the determining module 420 is specifically used for: if the network device is an access network device, determining not to use the at least one carrier to transmit and receive data with other terminal devices in a cell covered by the access network device.

Optionally, in some implementations, the communicating module 410 is further used for: using other carriers other than the at least one carrier to transmit and receive data with other terminal devices in a cell covered by the access network device.

Optionally, in some implementations, the determining module 420 is specifically used for: if the network device is a core network device, determining not to use the at least one carrier to transmit and receive data with other terminal devices in a network covered by the core network device.

Optionally, in some implementations, the communicating module 410 is further used for: using other carriers other than the at least one carrier to transmit and receive data with other terminal devices in the network covered by the core network device.

It should be understood that the device 400 for transmitting data according to the implementation of the present disclosure may correspond to the terminal device in the method implementations of the present disclosure, and the above-mentioned and other operations and/or functions of various units in the device 400 are respectively for realizing the corresponding processes of the terminal device in the method 200 shown in Fig. 2, and will not be repeated here for the sake of brevity.

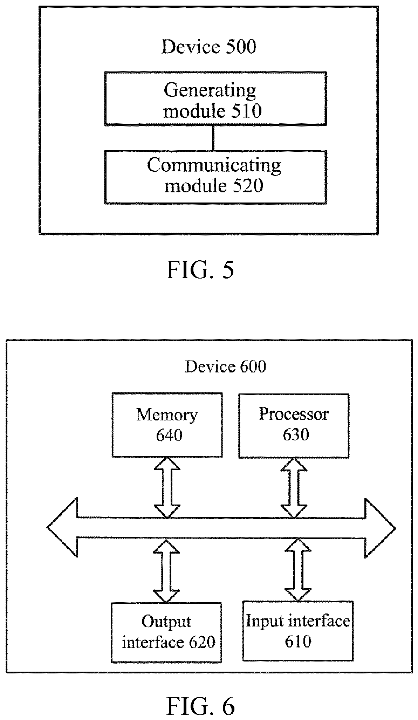

Fig. 5 is a schematic block diagram of a device for transmitting data according to an implementation of the present disclosure. The device 500 of Fig. 5 includes a generating module 510 and a communicating module 520.

The generating module 510 is used for generating first information.

The communicating module 520 is used for transmitting the first information to a terminal device, wherein the first information is used for the terminal device to determine whether to use at least one carrier to perform data communication with other terminal devices.

Optionally, in some implementations, the first information is used for indicating an enabling status of the at least one carrier.

Optionally, in some implementations, the first information is specifically used for indicating disabling transmission and/or reception of the at least one carrier.

Optionally, in some implementations, the first information is configuration information of the at least one carrier, and when the first information does not include information of a transmitting resource pool and/or a receiving resource pool of the at least one carrier, or the first information does not include authentication information of the at least one carrier, the first information is used for indicating the terminal device to disable transmission and/or reception of the at least one carrier.

Optionally, in some implementations, if the device is an access network device, the first information is specifically used for indicating disabling transmission and/or reception of the at least one carrier within a cell covered by the access network device; or if the device is a core network device, the first information is specifically used for indicating disabling transmission and/or reception of the at least one carrier within the network covered by the core network device.

Specifically, the device 500 may correspond to (e.g., may be configured as or be itself) the network device described in the method 300, and various modules or units in the device 500 are respectively used for executing various actions or processes performed by the network device in the method 300. Herein, in order to avoid redundancy, detailed description thereof is omitted.

As shown in Fig. 6, an implementation of the present disclosure also provides a device 600 for transmitting data, which may be the device 400 in Fig. 4 and may be used for executing the operations of the terminal device corresponding to the method 200 in Fig. 2. The device 600 includes an input interface 610, an output interface 620, a processor 630, and a memory 640. The input interface 610, the output interface 620, the processor 630, and the memory 640 may be connected through a bus system. The memory 640 is used for storing programs, instructions, or codes. The processor 630 is used for executing programs, instructions, or codes in the memory 640 to control the input interface 610 to receive signals, to control the output interface 620 to send signals, and to complete operations in the foregoing method implementations.

It should be understood that in the implementations of the present disclosure, the processor 630 may be a Central Processing Unit (CPU), or the processor 630 may be other general processor, digital signal processor (DSP), application specific integrated circuits (ASIC), field programmable gate arrays (FPGA) or other programmable logic device, discrete gate or transistor logic device, discrete hardware components, etc. The general processor may be a microprocessor, or the processor may be any conventional processor or the like.

The memory 640 may include the read only memory and random access memory and provide instructions and data to the processor 630. A portion of memory 640 may include non-volatile random access memory. For example, the memory 640 may also store type information of a device.

In implementation processes, various acts of the methods described above may be accomplished by integrated logic circuits of hardware or instructions in the form of software in the processor 630. The acts of the method disclosed in connection with the implementations of the present disclosure may be directly embodied to be accomplished by an execution of the hardware processor or by the combination of hardware and software modules in the processor. Software modules may be located in a storage medium commonly used in the art, such as a random access memory, flash memory, read-only memory, programmable read-only memory or electrically erasable programmable memory, or register. The storage medium is located in the memory 640, and the processor 630 reads information in the memory 640 and completes the acts of the above method in combination with its hardware. In order to avoid repetition, it will not be described in detail here.

In a specific implementation, the determining module 420 included in the device 400 in Fig. 4 may be implemented by the processor 630 in Fig. 6, and the communicating module 410 included in the device 400 in Fig. 4 may be implemented by the input interface 610 and the output interface 620 in Fig. 6.

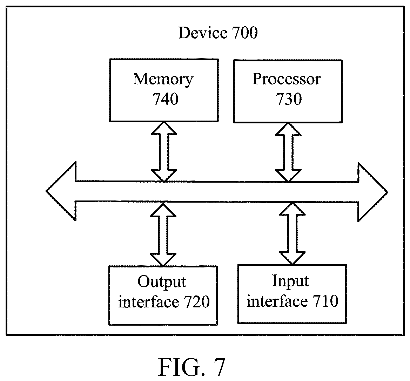

As shown in Fig. 7, an implementation of the present disclosure also provides a device 700 for transmitting data, which may be the device 500 in Fig. 5, and may be used for executing the operations of the network device corresponding to the method 300 in Fig. 3. The device 700 includes an input interface 710, an output interface 720, a processor 730, and a memory 740. The input interface 710, the output interface 720, the processor 730, and the memory 740 may be connected through a bus system. The memory 740 is used for storing programs, instructions, or codes. The processor 730 is used for executing programs, instructions, or codes in the memory 740 to control the input interface 710 to receive signals, to control the output interface 720 to send signals, and to complete the operations in the foregoing method implementations.

It should be understood that in the implementations of the present disclosure, the processor 730 may be a Central Processing Unit (CPU), or the processor 730 may be other general processor, digital signal processor (DSP), application specific integrated circuits (ASIC), field programmable gate arrays (FPGA) or other programmable logic device, discrete gate or transistor logic device, discrete hardware components, etc. The general processor may be a microprocessor, or the processor may be any conventional processor or the like.

The memory 740 may include the read only memory and random access memory, and provide instructions and data to the processor 730. A portion of memory 740 may include non-volatile random access memory. For example, the memory 740 may also store type information of a device.

In implementation processes, various acts of the methods described above may be accomplished by integrated logic circuits of hardware or instructions in the form of software in the processor 730. The acts of the method disclosed in connection with the implementations of the present disclosure may be directly embodied to be accomplished by an execution of the hardware processor or by the combination of hardware and software modules in the processor. The software modules may be located in a storage medium commonly used in the art, such as a random access memory, flash memory, read-only memory, programmable read-only memory or electrically erasable programmable memory, or register. The storage medium is located in the memory 740, and the processor 730 reads information in the memory 740 and completes the acts of the above method in combination with its hardware. In order to avoid repetition, it will not be described in detail here.

In a specific implementation, the generating module 510 included in the device 500 in Fig. 5 may be implemented by the processor 730 in Fig. 7, and the communicating module 520 included in the device 500 in Fig. 5 may be implemented by the input interface 710 and the output interface 720 in Fig. 7.

Implementations of the present disclosure also provide a computer readable storage medium that stores one or more programs including instructions that, when executed by a portable electronic device including a plurality of application programs, enable the portable electronic device to perform the method of the implementations shown in Figs. 2 and 3.

Implementations of the present disclosure also provide a computer program, which includes instructions that, when executed by a computer, enable the computer to execute the corresponding process of the method of the implementations shown in Figs. 2 and 3.

Those of ordinary skill in the art may recognize that various exemplary units and algorithm acts described in the implementations disclosed herein may be implemented in electronic hardware, or a combination of computer software and electronic hardware. Whether these functions are implemented in hardware or software depends on the specific application and design constraints of the technical solutions. Skilled artisans may use different methods to implement the described functions for each particular application, but such implementation should not be considered to be beyond the scope of the present disclosure.

Those skilled in the art may clearly understand that for convenience and conciseness of description, the specific working processes of the system, apparatus and unit described above may refer to the corresponding processes in the aforementioned method implementations and will not be described here.

In several implementations provided by the present disclosure, it should be understood that the disclosed systems, apparatuses and methods may be implemented in other ways. For example, the apparatus implementations described above are only illustrative, for example, the division of the units is only a logical function division, and there may be other division manners in actual implementation, for example, multiple units or components may be combined or integrated into another system, or some features may be ignored or not executed. On the other hand, the mutual coupling or direct coupling or communication connection shown or discussed may be indirect coupling or communication connection through some interface, apparatus or unit, and may be in electrical, mechanical or other forms.

The units described as separate components may or may not be physically separated, and the component shown as a unit may or may not be a physical unit, i.e., it may be located in one place or may be distributed over multiple network units. Some or all of the units may be selected according to actual needs to achieve the purpose of solutions of the implementations of the present disclosure.

In addition, various functional units in various implementations of the present disclosure may be integrated in one processing unit, or the various units may be physically present separately, or two or more units may be integrated in one unit.

The functions may be stored in a computer readable storage medium if implemented in the form of software functional units and sold or used as a separate product. Based on this understanding, the technical solution of the present disclosure, in essence, or the part contributing to the prior art, or the part of the technical solution, may be embodied in the form of a software product stored in a storage medium, including a number of instructions for causing a computer device (which may be a personal computer, a server, or a network device) to perform all or part of the acts of the method described in various implementations of the present disclosure. The aforementioned storage media include U disk, mobile hard disk, read-only memory, random access memory, magnetic disk or optical disk, and other media capable of storing program codes.

The aforementioned embodiments are meant to be examples useful for understanding the invention, which is only defined by the appended claims.

## Claims

1. A method (200) for transmitting data, comprising:
receiving, by a terminal device, first information transmitted by a network device (S210); and
determining, by the terminal device, whether to use at least one carrier for data communication with other terminal devices according to the first information (S220),
wherein the first information is configuration information of the at least one carrier,
the determining, by the terminal device, whether to use the at least one carrier for data communication with other terminal devices according to the first information, comprises:
determining, by the terminal device, to disable transmission and reception functions of the at least one carrier and not to use the at least one carrier for data communication with other terminal devices when the first information does not comprise information of a transmitting resource pool, or a receiving resource pool, or a transmitting resource pool and a receiving resource pool, of the at least one carrier; or
determining, by the terminal device, to disable transmission and reception functions of the at least one carrier and not to use the at least one carrier for data communication with other terminal devices when the first information does not comprise authentication information for the at least one carrier,
wherein the determining, by the terminal device, whether to use the at least one carrier for data communication with other terminal devices according to the first information, further comprises:
determining, by the terminal device, not to use the at least one carrier to transmit and receive data with other terminal devices in a cell covered by an access network device when the network device is the access network device; or
determining, by the terminal device, not to use the at least one carrier to transmit and receive data with other terminal devices in a network covered by an core network device when the network device is the core network device,
wherein the first information is also used for indicating an identification of a cell where the at least one carrier cannot be used, or an identification of a cell where the at least one carrier can be used, and the terminal device determines a usage range of the at least one carrier according to the identification of the cell indicated by the first information.

2. A device for transmitting data (400), comprising:
a communicating module (410), configured to receive first information transmitted by a network device; and
a determining module (420), configured to determine whether to use at least one carrier for data communication with other terminal devices according to the first information,
wherein the first information is configuration information of the at least one carrier,
the determining module (420) is configured to:
determine to disable transmission and reception functions of the at least one carrier and not to use the at least one carrier for data communication with other terminal devices when the first information does not comprise information of a transmitting resource pool, or a receiving resource pool, or a transmitting resource pool and a receiving resource pool, of the at least one carrier; or
determine to disable transmission and reception functions of the at least one carrier and not to use the at least one carrier for data communication with other terminal devices when the first information does not comprise authentication information for the at least one carrier,
wherein the determining module (420) is further configured to:
determine not to use the at least one carrier to transmit and receive data with other terminal devices in a cell covered by an access network device when the network device is the access network device; or
determine not to use the at least one carrier to transmit and receive data with other terminal devices in a network covered by a core network device when the network device is the core network device,
wherein the first information is also used for indicating an identification of a cell where the at least one carrier cannot be used, or an identification of a cell where the at least one carrier can be used, and the determining module (420) is further configured to determine a usage range of the at least one carrier according to the identification of the cell indicated by the first information.

3. The device according to claim 2, wherein the communicating module (410) is further configured to:
use other carriers other than the at least one carrier to transmit and receive data with other terminal devices in the cell covered by the access network device when the network device is the access network device;
use other carriers other than the at least one carrier to transmit and receive data with other terminal devices in the network covered by the core network device when the network device is the core network device.

## Patentansprüche

1. Verfahren (200) zum Übertragen von Daten, das Folgendes umfasst:
Empfangen, durch eine Endgerätevorrichtung, von ersten Informationen, die durch eine Netzvorrichtung übertragen wurden (S210); und
Bestimmen, durch die Endgerätevorrichtung, ob mindestens ein Träger für Datenkommunikation mit anderen Endgerätevorrichtungen verwendet werden soll, gemäß den ersten Informationen (S220),
wobei die ersten Informationen Konfigurationsinformationen des mindestens einen Trägers sind,
das Bestimmen, durch die Endgerätevorrichtung, ob der mindestens eine Träger für Datenkommunikation mit anderen Endgerätevorrichtungen verwendet werden soll, gemäß den ersten Informationen, Folgendes umfasst:
Bestimmen, durch die Endgerätevorrichtung, Übertragungs- und Empfangsfunktionen des mindestens einen Trägers zu blockieren und den mindestens einen Träger nicht für Datenkommunikation mit anderen Endgerätevorrichtungen zu verwenden, wenn die ersten Informationen keine Informationen über einen Übertragungsressourcenpool oder einen Empfangsressourcenpool oder einen Übertragungsressourcenpool und einen Empfangsressourcenpool des mindestens einen Trägers umfassen; oder
Bestimmen, durch die Endgerätevorrichtung, Übertragungs- und Empfangsfunktionen des mindestens einen Trägers zu blockieren und den mindestens einen Träger nicht für Datenkommunikation mit anderen Endgerätevorrichtungen zu verwenden, wenn die ersten Informationen keine Authentifikationsinformationen für den mindestens einen Träger umfassen,
wobei das Bestimmen, durch die Endgerätevorrichtung, ob der mindestens eine Träger für Datenkommunikation mit anderen Endgerätevorrichtungen verwendet werden soll, gemäß den ersten Informationen, ferner Folgendes umfasst:
Bestimmen, durch die Endgerätevorrichtung, den mindestens einen Träger nicht zum Übertragen und Empfangen von Daten mit anderen Endgerätevorrichtungen in einer Zelle, die von einer Zugangsnetzvorrichtung abgedeckt wird, zu verwenden, wenn die Netzvorrichtung die Zugangsnetzvorrichtung ist; oder
Bestimmen, durch die Endgerätevorrichtung, den mindestens einen Träger nicht zum Übertragen und Empfangen von Daten mit anderen Endgerätevorrichtungen in einem Netz, das durch eine Kernnetzvorrichtung abgedeckt wird, zu verwenden, wenn die Netzvorrichtung die Kernnetzvorrichtung ist,
wobei die ersten Informationen auch verwendet werden zum Angeben einer Identifikation einer Zelle, in der der mindestens eine Träger nicht verwendet werden kann, oder einer Identifikation einer Zelle, in der der mindestens eine Träger verwendet werden kann, und die Endgerätevorrichtung gemäß der Identifikation der Zelle, angegeben durch die ersten Informationen, einen Nutzungsbereich des mindestens einen Trägers bestimmt.

2. Vorrichtung zum Übertragen von Daten (400), die Folgendes umfasst:
ein Kommunikationsmodul (410), ausgelegt zum Empfangen von ersten Informationen, die durch eine Netzvorrichtung übertragen wurden; und
ein Bestimmungsmodul (420), ausgelegt zum Bestimmen, ob mindestens ein Träger für Datenkommunikation mit anderen Endgerätevorrichtungen verwendet werden soll, gemäß den ersten Informationen,
wobei die ersten Informationen Konfigurationsinformationen des mindestens einen Trägers sind,
das Bestimmungsmodul (420) ausgelegt ist zum:
Bestimmen, Übertragungs- und Empfangsfunktionen des mindestens einen Trägers zu blockieren und den mindestens einen Träger nicht für Datenkommunikation mit anderen Endgerätevorrichtungen zu verwenden, wenn die ersten Informationen keine Informationen über einen Übertragungsressourcenpool oder einen Empfangsressourcenpool oder einen Übertragungsressourcenpool und einen Empfangsressourcenpool des mindestens einen Trägers umfassen; oder
Bestimmen, Übertragungs- und Empfangsfunktionen des mindestens einen Trägers zu blockieren und den mindestens einen Träger nicht für Datenkommunikation mit anderen Endgerätevorrichtungen zu verwenden, wenn die ersten Informationen keine Authentifikationsinformationen für den mindestens einen Träger umfassen,
wobei das Bestimmungsmodul (420) ferner ausgelegt ist zum:
Bestimmen, den mindestens einen Träger nicht zum Übertragen und Empfangen von Daten mit anderen Endgerätevorrichtungen in einer Zelle, die durch eine Zugangsnetzvorrichtung abgedeckt wird, zu verwenden, wenn die Netzvorrichtung die Zugangsnetzvorrichtung ist; oder
Bestimmen, den mindestens einen Träger nicht zum Übertragen und Empfangen von Daten mit anderen Endgerätevorrichtungen in einem Netz, das durch eine Kernnetzvorrichtung abgedeckt wird, zu verwenden, wenn die Netzvorrichtung die Kernnetzvorrichtung ist,
wobei die ersten Informationen auch verwendet werden zum Angeben einer Identifikation einer Zelle, in der der mindestens eine Träger nicht verwendet werden kann, oder einer Identifikation einer Zelle, in der der mindestens eine Träger verwendet werden kann, und das Bestimmungsmodul (420) ferner ausgelegt ist zum Bestimmen, gemäß der Identifikation der Zelle, angegeben durch die ersten Informationen, eines Nutzungsbereich des mindestens einen Trägers.

3. Vorrichtung nach Anspruch 2, wobei das Kommunikationsmodul (410) ferner ausgelegt ist zum:
Verwenden anderer Träger als dem mindestens einen Träger zum Übertragen und Empfangen von Daten mit anderen Endgerätevorrichtungen in der Zelle, die von der Zugangsnetzvorrichtung abgedeckt wird, wenn die Netzvorrichtung die Zugangsnetzvorrichtung ist;
Verwenden anderer Träger als dem mindestens einen Träger zum Übertragen und Empfangen von Daten mit anderen Endgerätevorrichtungen in dem Netz, das von der Kernnetzvorrichtung abgedeckt wird, wenn die Netzvorrichtung die Kernnetzvorrichtung ist.

## Revendications

1. Procédé (200) de transmission de données, comprenant :
la réception, par un dispositif terminal, de premières informations transmises par un dispositif de réseau (S210), et
la détermination, par le dispositif terminal, qu'il convient d'utiliser ou non au moins une porteuse pour la communication de données avec d'autres dispositifs terminaux conformément aux premières informations (S220),
dans lequel
les premières informations sont des informations de configuration de l'au moins une porteuse,
la détermination, par le dispositif terminal, qu'il convient d'utiliser ou non l'au moins une porteuse pour la communication de données avec d'autres dispositifs terminaux conformément aux premières informations, comprend :
la détermination, par le dispositif terminal, de désactiver des fonctions de transmission et de réception de l'au moins une porteuse et de ne pas utiliser l'au moins une porteuse pour la communication de données avec d'autres dispositifs terminaux quand les premières informations ne comprennent pas d'informations d'un ensemble de ressources de transmission, ou d'un ensemble de ressources de réception, ou d'un ensemble de ressources de transmission et d'un ensemble de ressources de réception, de l'au moins une porteuse ; ou
la détermination, par le dispositif terminal, de désactiver des fonctions de transmission et de réception de l'au moins une porteuse et de ne pas utiliser l'au moins une porteuse pour la communication de données avec d'autres dispositifs terminaux quand les premières informations ne comprennent pas d'informations d'authentification pour l'au moins une porteuse,
dans lequel la détermination, par le dispositif terminal, qu'il convient d'utiliser ou non l'au moins une porteuse pour la communication de données avec d'autres dispositifs terminaux conformément aux premières informations, comprend en outre :
la détermination, par le dispositif terminal, de ne pas utiliser l'au moins une porteuse pour transmettre et recevoir des données avec d'autres dispositifs terminaux dans une cellule couverte par un dispositif de réseau d'accès quand le dispositif de réseau est le dispositif de réseau d'accès ; ou
la détermination, par le dispositif terminal, de ne pas utiliser l'au moins une porteuse pour transmettre et recevoir des données avec d'autres dispositifs terminaux dans un réseau couvert par un dispositif de réseau cœur quand le dispositif de réseau est le dispositif de réseau cœur,
dans lequel les premières informations sont également utilisées pour indiquer une identification d'une cellule où l'au moins une porteuse ne peut pas être utilisée, ou une identification d'une cellule où l'au moins une porteuse peut être utilisée, et le dispositif terminal détermine une plage d'utilisation de l'au moins une porteuse conformément à l'identification de la cellule indiquée par les premières informations.

2. Dispositif de transmission de données (400), comprenant :
un module de communication (410), configuré pour recevoir des premières informations transmises par un dispositif de réseau ; et
un module de détermination (420), configuré pour déterminer qu'il convient d'utiliser ou non au moins une porteuse pour la communication de données avec d'autres dispositifs terminaux conformément aux premières informations,
dans lequel
les premières informations sont des informations de configuration de l'au moins une porteuse,
le module de détermination (420) est configuré pour :
déterminer de désactiver des fonctions de transmission et de réception de l'au moins une porteuse et de ne pas utiliser l'au moins une porteuse pour la communication de données avec d'autres dispositifs terminaux quand les premières informations ne comprennent pas d'informations d'un ensemble de ressources de transmission, ou d'un ensemble de ressources de réception, ou d'un ensemble de ressources de transmission et d'un ensemble de ressources de réception, de l'au moins une porteuse ; ou
déterminer de désactiver des fonctions de transmission et de réception de l'au moins une porteuse et de ne pas utiliser l'au moins une porteuse pour la communication de données avec d'autres dispositifs terminaux quand les premières informations ne comprennent pas d'informations d'authentification pour l'au moins une porteuse,
dans lequel le module de détermination (420) est configuré en outre pour :
déterminer de ne pas utiliser l'au moins une porteuse pour transmettre et recevoir des données avec d'autres dispositifs terminaux dans une cellule couverte par un dispositif de réseau d'accès quand le dispositif de réseau est le dispositif de réseau d'accès ; ou
déterminer de ne pas utiliser l'au moins une porteuse pour transmettre et recevoir des données avec d'autres dispositifs terminaux dans un réseau couvert par un dispositif de réseau cœur quand le dispositif de réseau est le dispositif de réseau cœur,
dans lequel les premières informations sont également utilisées pour indiquer une identification d'une cellule où l'au moins une porteuse ne peut pas être utilisée, ou une identification d'une cellule où l'au moins une porteuse peut être utilisée, et le module de détermination (420) est configuré en outre pour déterminer une plage d'utilisation de l'au moins une porteuse conformément à l'identification de la cellule indiquée par les premières informations.

3. Dispositif selon la revendication 2, dans lequel le module de communication (410) est configuré en outre pour :
utiliser d'autres porteuses que l'au moins une porteuse pour transmettre et recevoir des données avec d'autres dispositifs terminaux dans la cellule couverte par le dispositif de réseau d'accès quand le dispositif de réseau est le dispositif de réseau d'accès ;
utiliser d'autres porteuses que l'au moins une porteuse pour transmettre et recevoir des données avec d'autres dispositifs terminaux dans le réseau couvert par le dispositif de réseau cœur quand le dispositif de réseau est le dispositif de réseau cœur.
